Europäisches Patentamt

European Patent Office

Office européen des brevets

(11) Publication number: **0 091 521**
**B1**

(12) **EUROPEAN PATENT SPECIFICATION**

(45) Date of publication of patent specification: **03.12.86**

(21) Application number: **82301920.3**

(22) Date of filing: **14.04.82**

(51) Int. Cl.⁴: **H 01 M 10/36,** H 01 M 2/40,
H 01 M 4/38

(54) Metal-bromine secondary battery.

(43) Date of publication of application:
**19.10.83 Bulletin 83/42**

(45) Publication of the grant of the patent:
**03.12.86 Bulletin 86/49**

(84) Designated Contracting States:
**DE FR GB IT**

(56) References cited:
**GB-A-1 569 398**
**US-A-4 206 269**

(73) Proprietor: **Kabushiki Kaisha Meidensha**
**1-17, Ohsaki 2-chome**
**Shinagawa-ku Tokyo 141 (JP)**

(72) Inventor: **Fujii, Toshinobu**
**4-20-12 Hinodai**
**Hino-shi Tokyo (JP)**

(74) Representative: **Brock, Peter William et al**
**Michael Burnside & Partners 2 Serjeants' Inn**
**Fleet Street**
**London EC4Y 1HL (GB)**

Courier Press, Leamington Spa, England.

# 0 091 521

## Description

The present invention relates to circulating electrolyte type metal-halogen batteries and in particular to improvements in metal-bromine secondary batteries of the type employing bromine as a positively active material.

More particularly, the invention relates to a secondary battery in which a complexing agent is added to the positive electrolyte storage tank such that particularly the bromine molecules in the electrolyte form a bromine complex compound constituting a separate phase in the lower part of the electrolyte, or even if the complexing agent does not unite with the bromine, the complexing agent does not dissolve in the electrolyte or does not easily dissolve in the electrolyte, forming a separate phase from the electrolyte, thus effectively maintaining the electrolyte in the desired condition and preventing self-discharge and/or an increase in the battery internal resistance, and thereby making the electrolyte storage tank compact and high in safety.

The invention is described with reference to the accompanying drawings, in which:

Fig. 1 is a diagram showing the principle of a prior art electrolyte circulation type metal-bromine secondary battery;

Fig. 2 is a schematic diagram showing the construction of an embodiment of this invention;

Fig. 3 is a schematic diagram showing the construction of another embodiment of this invention; and

Fig. 4 is a graph showing the relation between the complexing agent concentration and the bromine molecule concentration in the supernatant electrolyte.

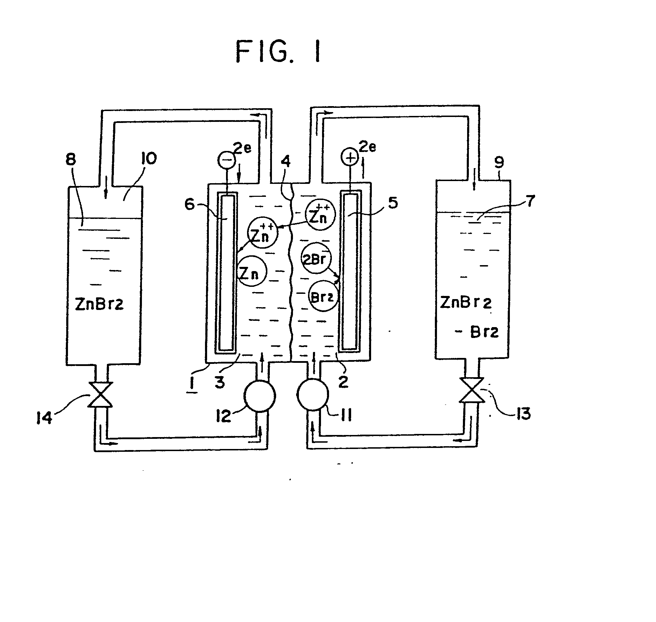

A circulating electrolyte type metal-halogen secondary battery known in the art is shown schematically in Fig. 1. In this battery, a positive electrolyte ($ZnBr_2+Br_2$) is contained in one reaction chamber 2 of a cell 1, and a negative electrolyte ($ZnBr_2$) is contained in the other reaction chamber 3.

The chambers 2 and 3 are divided from one another by an ion-exchange membrane 4. A positive electrode 5 is positioned in the positive electrolyte and a negative electrode 6 is positioned in the negative electrolyte. The positive electrolyte is supplied by a pump 11 from positive electrolyte storage tank 9 via a valve 13, and the negative electrolyte is supplied by a pump 12 from a negative electrolyte storage tank 10 via 14.

When a metal-bromine secondary battery of the above construction is charged, bromine is deposited at the positive electrode and the metal is deposited at the negative electrode. While the metal deposited at the negative electrode is electrodeposited on the electrode plate surface, the bromine deposited at the positive electrode will dissolve in the electrolyte and is circulated along with the electrolyte.

As a result, the bromine deposited during the operation of the battery can reach the zinc side of the opposite electrode via the separator, which is a major cause for the occurrence of self-discharge. Also, bromine is a halogen, and highly corrosive, thus giving limitations to the materials for constructing batteries.

To overcome these deficiencies, methods have heretofore been proposed in which a quaternary ammonium salt is used to form a bromine-complex compound and thereby to separate the bromine from the electrolyte. The complex compounds of quaternary ammonium salts which have heretofore been proposed are all completely soluble in aqueous solutions which constitute electrolytes.

As a result, while the addition of a complexing agent inevitably lowers the electric conductivity of the electrolyte, the complexing agent and the electrolyte form a single phase so that the rate of reaction between the deposited bromine and the complexing agent is high and thus there is no need to incorporate any special means in the construction of the electrolyte tank with respect to the reaction.

However, where the electrolyte and the complexing agent constitute two phases, it is necessary to incorporate special means in the positive electrolyte storage tank, so as to ensure a rapid reaction between the bromine molecules and the complexing agent. Even in such cases, the use of any external energy, e.g., agitation or heating for improving the reaction efficiency is not desirable, since this results in a loss of the station power.

US—A—4206269 describes a zinc-bromine battery with respective loops for recirculation of negative and positive electrolytes, the latter being of smaller volume than the former. Bromine is stored in the positive electrolyte to loop in the form of polybromide oil, at the bottom of a liquid-liquid contact device, the positive electrolyte being led from the electrode compartment to the bottom of the contact device, and recirculated to the electrode compartment from the top of the device.

Our research directed towards overcoming the foregoing deficiencies has had some success by selecting as the complexing agent substances which are capable of separating the bromine from the electrolyte and insoluble in the electrolyte.

It is therefore the object of this invention to provide an electrolyte circulation type secondary battery employing an improved electrolyte storage tank construction which satisfies the following two requirements for improving the efficiency of reaction between two separate phases constituted by an electrolyte and a complexing agent:

(1) The surface area for reaction between the bromine molecules and the complexing agent is increased; and

(2) The contacting period for the bromine molecules and the complexing agent is increased.

2

The complexing agent can, for example, be a tertiary amine having the general formula R R'R''N where R, R' and R'' are alkyl radicals, which may be the same or different.

According to the present invention, there is provided a metal-bromine secondary battery in which the negatively-active material is cadmium, zinc or lead, with means for circulating a positive electrolyte containing a complexing agent between a positive electrode compartment and a positive electrolyte storage tank comprising an upper electrolyte zone and a lower complexing agent zone whose cross-sectional area is less than that of the upper zone. Means are provided to introduce positive electrolyte from the electrode compartment at the bottom of the lower zone, and to recycle it to the electrode compartment from the upper zone, after it has risen through insoluble complexing agent in the lower zone.

The invention will now be described in detail with reference to the illustrated embodiments.

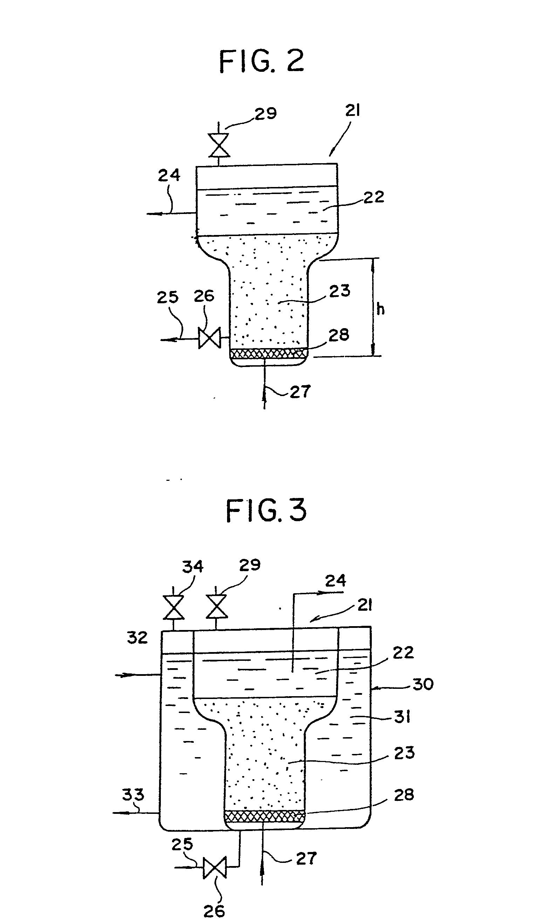

Referring to Fig. 2, numeral 21 designates a positive electrolyte storage tank comprising an upper electrolyte zone 22 and a complexing agent zone 23 (or a zone for complexing agent and bromine complex compound). Numerals 24 designates an upper electrolyte outlet pipe, 25 a bromine complex compound outlet pipe, 26 a valve, and 27 an electrolyte inlet pipe. Numeral 28 designates a fine perforated filter positioned in the lower part of the electrolyte storage tank 21, and 29 an exhaust pipe.

With the battery of this invention constructed as described above, the electrolyte returned from the cell 1 (Fig. 1) is introduced into the tank upper part from the electrolyte inlet pipe 27 via the fine perforated filter 28. The electrolyte is thereby finely divided so that by virtue of this and its buoyancy due to the specific gravity difference, the electrolyte rises into the upper zone 22, thereby satisfying the above-mentioned requirement (1). As it rises, the electrolyte passes through the complexing agent zone 23, so that the bromine reacts with the complexing agent and a bromine complex compound is formed. As shown in the Figure 2, the lower part (the complexing agent zone 23) of the electrolyte storage tank 21 is smaller in cross-sectional area than the tank upper part (the upper electrolyte zone 22) and this serves to increase the period of reaction (contact) between the introduced electrolyte and the complexing agent and satisfies the above-mentioned requirement (2). The invention is not intended to be limited to this specific shape and the lower part may have an inverted frusto-conical form. On the other hand, while the relation between the bottom surface of the electrolyte storage tank 21 and the part of the complexing agent zone 23 only needs to be determined by the amounts of the electrolyte and complexing agent which are contained in desired amounts, it is desirable that the height "h" of the complexing agent zone 23 be as large as possible, so as to increase the reaction period.

After the bromine molecules have been removed, the electrolyte is supplied to the cell during the charge via the electrolyte outlet pipe 24, and during the discharge, the valve 26 is opened so that a mixture of the electrolyte and the complexing agent is supplied to the cell.

Fig. 3 shows another embodiment of the invention which differs from the first embodiment described in connection with Fig. 2, in that a negative electrolyte storage tank 30 is arranged around the positive electrolyte storage tank 21. Numeral 31 designates a negative electrolyte, 32 a negative electrolyte inlet pipe, 33 a negative electrolyte outlet pipe, and 34 an exhaust pipe. In this embodiment, the positive electrolyte is circulated in the same manner as in the embodiment of Fig. 2 and the negative electrolyte is supplied via the outlet pipe 33 into the cell chamber from which the electrolyte is returned to the negative electrolyte storage tank 30 via the inlet pipe 32.

To show the effect of this invention, the following Table shows the electrolyte conductivities (K) obtained by using as the complexing agent three different tertiary amines and a conventional quaternary ammonium salt, respectively.

TABLE

| Complexing agent | Electrolyte composition | | K(mho · cm$^{-1}$) |
|---|---|---|---|
| $(C_2H_5)_4N \cdot Br$ | $ZnBr_2(3M)+(C_2H_5)_4N \cdot Br$ | (0.2M) | 0.106 |
| $(CH_3)_3N$ | $ZnBr_2(3M)+(CH_3)_3N$ | (0.9M) | 0.081 |
| $(C_2H_5)_3N$ | $ZnBr_2(3M)+(C_2H_5)_3N$ | (0.9M) | 0.075 |
| $(C_3H_7)_3N$ | $ZnBr_2(3M)+(C_3H_7)_3N$ | (0.9M) | 0.110 |

Since the conductivity of the used aqueous solution of zinc bromide is 0.124 mho · cm$^{-1}$ at room temperature, the conductivity of the supernatant electrolyte obtained by using tripropylamine is low and advantageous from the standpoint of the battery internal resistance.

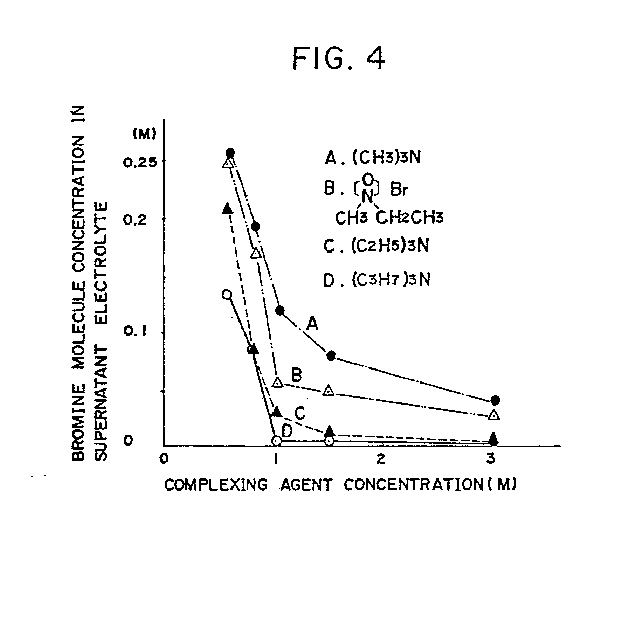

Fig. 4 shows the concentrations of the unabsorbed bromine molecules remaining in the upper electrolytes after a given amount of bromine had been released in the electrolytes containing different concentrations of complexing agents. As will be seen from the Figure, among the examples of this invention the addition of the tripropylamine, even in small amounts, had the effect of absorbing the bromine satisfactorily, and there was no trace of bromine molecules in the supernatant electrolyte when 2.5 mols of it was added.

From the foregoing description it will be seen that the present invention has the following advantages.

(1) Due to the increased reaction surface area for the bromine molecules and the complexing agent and the increased reaction (contact) period between the two, the reaction efficiency of the bromine complex compound is high and thus the efficiency of the battery is also high.

(2) Since no external energy is used to increase the reaction efficiency, there is no danger of causing any station power loss.

(3) Where the positive electrolyte storage tank is arranged within the negative electrolyte storage tank, externally the tanks appear as a single tank and they can be formed into a cylindrical or cubic shape which is compact and highly advantageous from the standpoint of utilization of space.

(4) The zone of the bromine complex compound formed in the positive electrolyte storage tank is protected by the negative electrolyte storage tank and thus external shocks are lessened, thereby eliminating the danger of leakage of the bromine complex compound and ensuring safety.

(5) The positive electrolyte storage tank is subjected to a hydrostatic pressure due to the negative electrolyte storage tank and practically there is no difference between the inner and outer pressures. Thus, the tanks can easily be made from any synthetic resin material which is thin and has excellent corrosion resisting properties.

**Claims**

1. A circulating electrolyte type metal-bromine secondary battery in which the negatively active material is cadmium, zinc or lead, and means are provided for circulating a positive electrolyte containing a complexing agent between a positive electrode compartment and a positive electrolyte storage tank comprising an upper electrolyte zone and a lower complexing agent zone, characterised in that the cross-sectional area of the complexing agent zone is less than that of the electrolyte zone, with means for introducing positive electrolyte into the electrolyte storage tank at the bottom of said complexing agent zone and for taking electrolyte from said upper zone.

2. A secondary battery according to Claim 1 characterised in that the positive electrolyte storage tank is disposed within a negative electrolyte storage tank.

3. A secondary battery according to Claim 1 or 2 characterised in that a filter is arranged in the lower part of said positive electrolyte storage tank.

**Patentansprüche**

1. Brom-Metall-Sekundärbatterie mit zirkulierendem Elektrolyt, in der das negativ wirkende Material Cadmium, Zink oder Blei ist und eine Einrichtung zum Zirkulieren eines positiven Elektrolyts, welcher einen Komplexbildner enthält, zwischen einem positiven Elektrodenraum und einem positiven Elektrolytspeicherbehälter vorgesehen ist, der eine obere Elektrolytzone und eine untere Komplexbildnerzone aufweist, dadurch gekennzeichnet, daß die Querschnittsfläche der Komplexbildnerzone kleiner ist als die der Elektrolytzone, mit einer Einrichtung zum Einleiten positiven Elektrolyts in den Elektrolyts- speicherbehälter am Boden der Komplexbildnerzone und zum Aufnehmen von Elektrolyt aus der genannten oberen Zone.

2. Sekundärbatterie nach Anspruch 1, dadurch gekennzeichnet, daß der positive Elektrolytspeicherbehälter innerhalb eines negativen Elektrolytspeicherbehälters angeordnet ist.

3. Sekundärbatterie nach Anspruch 1 oder 2, dadurch gekennzeichnet, daß ein Filter im unteren Teil des genannten Elektrolytspeicherbehälters angeordnet ist.

**Revendications**

1. Batterie secondaire métal-brome du type à circulation d'électrolyte dans laquelle le matériau à activité négative est du cadmium, du zinc ou du plomb, et dans laquelle des moyens sont prévus pour faire circuler un électrolyte positif contenant un agent de formation de complexe entre un compartiment d'électrode positive et un réservoir d'électrolyte positif comportant une zone supérieure d'électrolyte et une zone inférieure d'agent de formation du complexe, caractérisée en ce que la surface de section droite de la zone de l'agent de formation du complexe est inférieure à celle de la zone de l'électrolyte, des moyens étant prévus pour introduire l'électrolyte positif dans le réservoir d'électrolyte, à la base de ladite zone d'agent de formation du complexe, et pour prélever l'électrolyte depuis ladite zone supérieure.

2. Batterie secondaire selon la revendication 1, caractérisée en ce que le réservoir d'électrolyte positif est disposé à l'intérieur d'un réservoir d'électrolyte négatif.

3. Batterie secondaire selon la revendication 1 ou la revendication 2, caractérisée en ce qu'un filtre est disposé dans la partie inférieure dudit réservoir d'électrolyte positif.

# FIG. 1

# FIG. 2

# FIG. 3

# FIG. 4

A . (CH3)3N

B . $\left[\begin{array}{c}O\\N\end{array}\right]$ Br
   CH3  CH2CH3

C . (C2H5)3N

D . (C3H7)3N

BROMINE MOLECULE CONCENTRATION IN SUPERNATANT ELECTROLYTE

(M)

0.25

0.2

0.1

0

0    1    2    3

COMPLEXING AGENT CONCENTRATION ( M )